# EUROPEAN PATENT APPLICATION

(11) **EP 1 868 110 A1**
(43) Date of publication of application: **19.12.2007**
(21) Application number: 07108920.5
(22) Date of filing: 25.05.2007
(51) Int. Cl.: G06F 17/00, H04M 3/533

(54) **Apparatus and method for managing messages in mobile communication terminal**

(30) Priority: 13.06.2006 KR 20060052825
(71) Applicant: Samsung Electronics Co., Ltd., Suwon-si Gyeonggi-do 443-742 (KR)
(72) Inventor: Park, Youn-Ho, Yeongtong-gu, Suwon-si, Gyeonggi-do (KR); Lee, Dong-Ryul, Suwon-si, Gyeonggi-do (KR)
(74) Representative: Zimmer, Franz-Josef

(57) **Abstract**

An apparatus and method are disclosed that use a thread function to group and manage messages. A method of transmitting a message includes generating a thread ID for supporting a thread function, generating a message including the thread ID, and transmitting the generated message. A method of receiving a message includes detecting whether a received message includes a thread ID, searching a message storage to detect messages therein having the same thread ID when it is detected that the received message includes a thread ID, and grouping contents of the detected messages having the same thread ID, and displaying the grouped contents. Thus, contents of messages during a messaging dialogue can be manifestly arranged and discerned.

## Description

The present invention relates generally to an apparatus and method for managing messages in a mobile communication terminal, and, more particularly, to an apparatus and method for managing messages in groups using a thread function.

Generally, the thread function is commonly used on internet bulletin boards as word bundling (or replying), and is a function especially useful for enabling the flow of dialogue on a subject matter to be manifestly accessible.

Use of mobile communication terminals is rapidly increasing due to developments in various electronics and communications industries. Consequently, service providers (and terminal manufacturers) are competitively developing mobile communication terminals with various functions to attract potential users. For example, mobile communication terminals have phone directories, games, schedulers, message, internet, e-mail, and various other functions.

Recently, with regard to the use of the messaging function, many users are now using text messaging as a means of real-time communication comparable to voice communication that continuously sends and receives messages in a dialogue. Generally, a message is composed of the sender's phone number, the receiver's phone number, and the contents of the message; and a mobile communication terminal stores messages in an outbox and an inbox. Since links are not designated between stored messages, a user can only check the recipient of the message and the time that it was sent.

When a user is engaged in a dialogue with another party using continuous messaging back and forth, it is very difficult for the user to refer back to the flow of the dialogue by checking each of the messages thereof one by one. Even if the user wishes to check the contents of the dialogue later on, because it is not possible to search for a specific topic from among the many messages sent and received during the dialogue that have been stored in the in and out boxes, this causes inconvenience for the user.

The present invention has been designed to substantially solve at least the above problems and/or disadvantages and to provide at least the advantages below. Accordingly, the object of the present invention is to provide an apparatus and method for managing messages in groups using a thread function in a mobile communication terminal.

This object is solved by the subject matter of the independent claims.

Preferred embodiments are defined in the dependent claims.

An aspect of the present invention is to provide an apparatus and method for grouping and managing messages that are related in a mobile communication terminal.

A further aspect of the present invention is to provide an apparatus and method for generating a reply message using a random ID included in a received message in a mobile communication terminal.

According to one aspect of the present invention, there is provided a method of transmitting a message in a mobile communication terminal, including generating a thread ID for supporting a thread function; generating a message including the thread ID; and transmitting the generated message.

According to another aspect of the present invention, there is provided a method of receiving a message in a mobile communication terminal, including detecting whether a received message includes a thread ID; searching a message storage to detect messages therein having the same thread ID, when it is detected that the received message includes a thread ID; and grouping contents of the detected messages having the same thread ID, displaying the grouped contents; detecting a thread ID of the received message, when a thread mode reply is selected during the displaying of the detected messages; generating a reply message including the detected thread ID; and transmitting the generated reply message.

According to yet another aspect of the present invention, there is provided a method of managing messages in a mobile communication terminal, including displaying a message list during a message check mode; checking whether a thread ID is included in a selected message when one category is selected from the message list; searching a message storage and detecting messages having the same thread ID, when the thread ID is included in the selected message; and grouping contents of the messages having the same thread ID, and displaying the grouped contents.

According to a further aspect of the present invention, there is provided an apparatus for transmitting messages in a mobile communication terminal, including a generator for generating a thread ID for supporting a thread function; a message writer for writing contents of a message including the generated thread ID; a message encoder for encoding the contents of the message from the message writer according to a predetermined standard; a communicator for transmitting the message encoded by the message encoder; a message decoder for decoding a received message; a detector for detecting a thread ID in contents of the message decoded in the message decoder; and a controller for searching a memory to detect messages having the same thread ID, when the thread ID is detected by the detector, and grouping contents of the detected messages having the same thread ID and displaying the grouped contents.

The present invention will become more apparent from the following detailed description when taken in conjunction with the accompanying drawings in which:
FIG. 1 is a block diagram of a mobile communication terminal according to the present invention;
FIG. 2 is a block diagram detailing the function of a controller in a mobile communication terminal according to the present invention;
FIG. 3 is a flowchart of a process for sending a message using a thread function in a mobile communication terminal according to the present invention;
FIG. 4 is a flowchart of a process for transmitting a message using a thread function in a mobile communication terminal according to the present invention;
FIG. 5 is a flowchart of a process for checking a message using a thread function in a mobile communication terminal according to the present invention; and
FIGs. 6, 7, and 8 are examples of display screens according to the present invention.

Preferred embodiments of the present invention will be described herein below with reference to the accompanying drawings. In the following description, well-known functions or constructions are not described in detail since they would obscure the invention in unnecessary detail. Also, terminology used herebelow is used and defined in accordance with the functions of the present invention, and may be modified according to the intent and customs of a user or operator.

The present invention provides for grouping and managing messages in a mobile communication terminal. The present invention allows the sending and receiving of messages having a common ID in order to group and manage messages with the same ID.

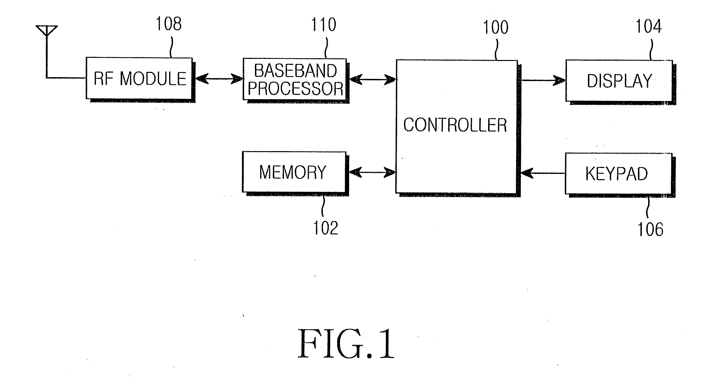

FIG. 1 is a block diagram of a mobile communication terminal according to the present invention. Here, the mobile communication terminal may be a second or third generation Code Division Multiple Access (CDMA) terminal, a fourth generation broadband wireless access terminal, or any mobile communication terminal capable of transmitting and receiving messages. The descriptions given below refer generally to these examples of mobile communication terminals.

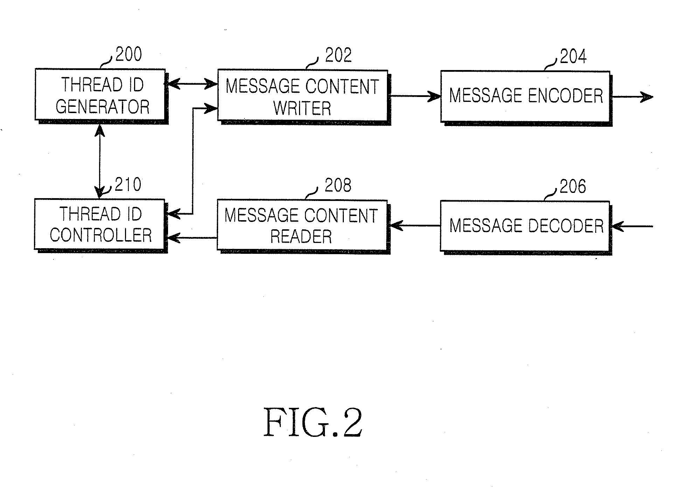

Referring to FIG. 1, a controller 100 controls the overall operations of the mobile communication terminal. For instance, controller 100 performs processing and controlling of audio communication and data communication. Controller 100 also has an added capability of grouping and managing related messages, according to the present invention. A detailed description of the message sending/receiving function of the controller according to the present invention will now be given below with reference to FIG. 2.

The memory 102 may include program memory, data memory, and nonvolatile memory. The memory 102 stores programs for controlling the overall operation of the mobile communication terminal, temporary data that arises during the operation of the terminal, and system parameter and other storable data (i.e., phone numbers, messages, etc.).

The display unit 104 displays operating information (or indicators) during the operation of the mobile communication terminal, numerals and characters that have been entered, various moving and still images, etc. The display unit 104 may use a color Liquid Crystal Display (LCD), which may be a touch screen type that functions doubly as an input device.

The keypad 106 includes number keys and a plurality of function keys (a send key, navigational (or arrow) keys, an OK key, etc.) and letter keys (for text messaging, etc., that share the other buttons). When a user presses a key, its corresponding key data signal is sent to the controller 100.

The Radio Frequency (RF) module 108 processes an RF signal received through an antenna. The baseband processor 110 processes a baseband signal transmitted and received between the RF module 120 and the controller 100.

FIG. 2 is a block diagram detailing the function of a controller in a mobile communication terminal according to the present invention. Referring to of FIG. 2, in order to perform message transmission using a thread function according to the present invention, the controller 100 includes a thread ID generator 200, a message content writer 202, a message encoder 204, a message decoder 206, a message content reader 208, and a thread ID controller 210. With regard to transmitting messages, the thread ID generator 200 generates a random number to be used as a thread ID when a new message is being written. The random number generated by a random number generator, or a combination of a random number generated by a random number generator and user discerning data (i.e., a phone number) may be used as the thread ID value.

The thread ID controller 210 controls a list of thread IDs (hereinafter referred to as the 'thread ID list') for messages stored in the message storage (the inbox, the outbox, and a draft message box). Here, the thread ID controller 210 may map and manage the thread IDs and phone numbers of recipients that are being communicated with using the thread IDs. Therefore, the thread ID generator 200 compares the generated random numbers with the thread lDs on the list, and generates alternate random numbers, should there be any matches.

The message content writer 202 writes a message to be included in the message payload according to user inputs. Here, the message content writer 202 includes the thread ID generated by the thread ID generator 200 in the contents of the message. When writing a reply message, the message content writer 202 checks the thread ID of the received message in the thread ID controller 210, and includes the obtained thread ID in the message contents.

As an example, the thread ID may use and include the following discerning symbols at the beginning of the message contents.
<T>XXXXXXXX</T>

Here, <T></T> is a symbol for discerning the thread ID (XXXXXXXX).

Likewise, because the thread ID is included in the message contents, the present invention may be easily applied to communication networks without any replacements/alterations thereto.

The message encoder 204 uses a sender/receiver's phone number entered by a user to compose a header, and encodes the message to be transmitted using the message contents from the message writer 202 and the header. The thus generated message is then transmitted through the antenna via the baseband processor 110 and the RF module 108. The message that is sent is also stored in the message storage (outbox) of the memory 102. Here, a delimiter that signifies that the message includes a thread ID may also be stored.

Next, with regard to receiving messages, the message decoder 206 reads and analyzes a header from a message received through the baseband processor 110, and reads the payload of the received message and provides the same to the message content reader 208.

The message content reader 208 analyzes the payload (message contents) from the message decoder 206, and, if there is a thread ID included in the message contents, provides the thread ID to the thread ID controller 210.

Then, the thread ID controller 210 detects if a thread ID exists that matches the thread ID provided by the message content reader 208, and adds the thread ID to the thread ID list if the thread ID does not exist. The thread ID list is renewed when all the messages corresponding to the thread ID are deleted by the user. The received message is stored in the message storage (inbox) of the memory 102. Here, a delimiter that signifies that the message includes a thread ID may also be stored.

In the above embodiment, the messages are stored together with delimiters that signify that the received and the transmitted messages include thread IDs in the message storage in and out boxes. Simultaneously, the contents of messages that include the same thread IDs may be grouped into a single text and managed in a separate storage (hereinafter called the "thread message storage"). In this case, the thread function is used to separately manage transmitted messages, so that the user may use the thread function to easily find common content from the messages.

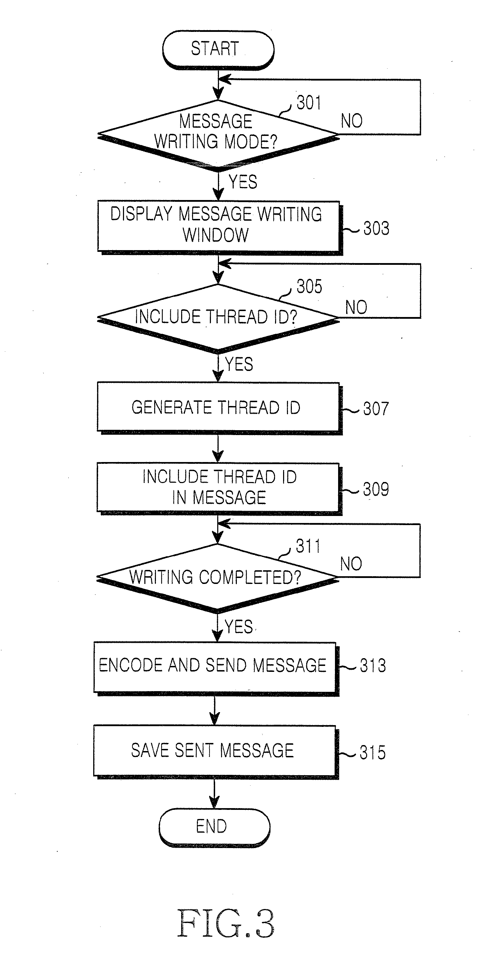

Further detail regarding the operation of a mobile communication terminal in FIGS. 1 and 2 according to the present invention will be given. Making reference to FIG. 3, which is a flowchart of a process for sending a message using a thread function in a mobile communication terminal according to the present invention.

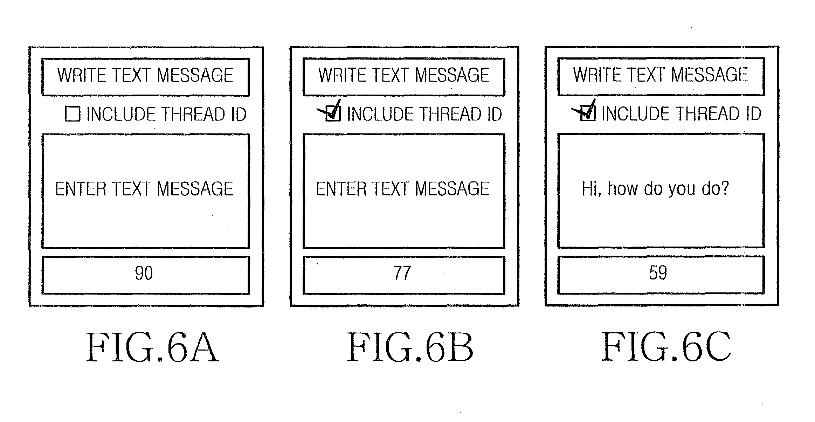

Referring to FIG. 3, the controller 100 first detects whether a message writing mode has been enabled by the user through the keys in step 301. If the message writing mode has been enabled, the controller 100 displays a message writing window in step 303, and receives the input of a message by the user. An example of the message writing window is shown in FIG. 6A. As shown, the message writing window is divided into a region for displaying content inputted by the user, a check box for selecting whether to include a thread ID, and a region for displaying the remaining characters. Accordingly, the user can use the check box while writing a message to determine whether to include a thread ID.

Next, the controller 100 detects in step 303 whether the user has opted to use a thread ID, that is, whether the user has checked the check box, as shown in FIG. 6B. When the option for using a thread ID has been selected, the controller 100 performs step 307, where a random number is generated as a thread ID. Here, if the random number generated by a random number generator is currently in use, another random number is generated and set as the thread ID.

Thus, after the thread ID has been generated, in step 309, the controller 100 includes the generated thread ID in the content of the message inputted by the user. Here, as described above, delimiters are used before and after the thread ID to discern it from ordinary text contents of the message.

The controller 100 detects in step 311 whether the message writing has been completed. If the message writing has been completed, the controller 100 encodes the message based on the written message contents and the inputted phone number, and sends the message in step 313. Then, after the controller 100 saves the sent message in the outbox and ends the present algorithm in step 315. Here, a delimiter that signifies that the message includes a thread ID may also be stored.

In the above-described embodiment, the sent message is saved automatically; however, in another embodiment, a window for selecting whether to save the sent message may be displayed, and the sent message may be saved or deleted according to the user's selection. However, because it is preferable that a message sent using the thread function should be saved, when a user makes the selection not to save such a message, a warning window may be made to pop up, inducing the saving of the message.

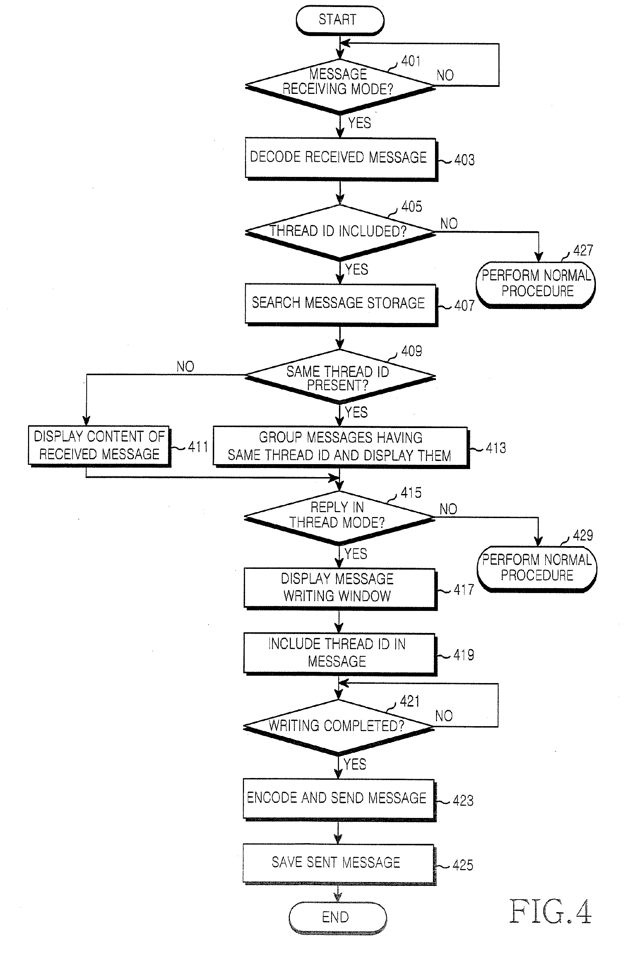

FIG. 4 is a flowchart of a process for transmitting a message using a thread function in a mobile communication terminal according to the present invention. Referring to FIG. 4, first, the controller 100 detects in step 401 whether a message receiving mode has been enabled by an incoming message. When the message receiving mode is enabled, the controller 100 decodes the received message and reads the header and contents of the message in step 403.

Then, the controller 100 performs step 405 in which it detects whether the received message contains a thread ID. If the message does not contain a thread ID, the controller skips to step 427, and performs a normal message receiving procedure. If the message is found to contain a thread ID, the controller 100 searches the message storage in and out boxes using the thread ID in step 407.

After the search, the controller 100 detects in step 409 whether messages having the same thread ID already exist. Here, if the thread IDs currently in use are being managed in a separate list (the thread ID list), the message storage is not searched directly, and the list is searched to determine whether the same thread ID already exists.

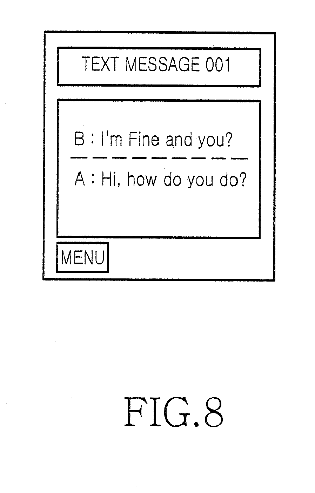

If no messages exist having the same thread ID, the controller displays the contents of the received message in step 411, and proceeds to step 415. If messages having the same thread ID already exist, the controller 100 groups the messages with the same thread ID (including the received message) in time, i.e. temporal or chronological, order and displays the messages in step 413, after which the controller 100 proceeds to step 415. In one example, as shown in FIG. 8, the contents of a plurality of messages having the same thread ID are displayed in time order. The content of the first row in FIG. 8 is that of the received message, and the second row displays the contents of a message retrieved from the message storage.

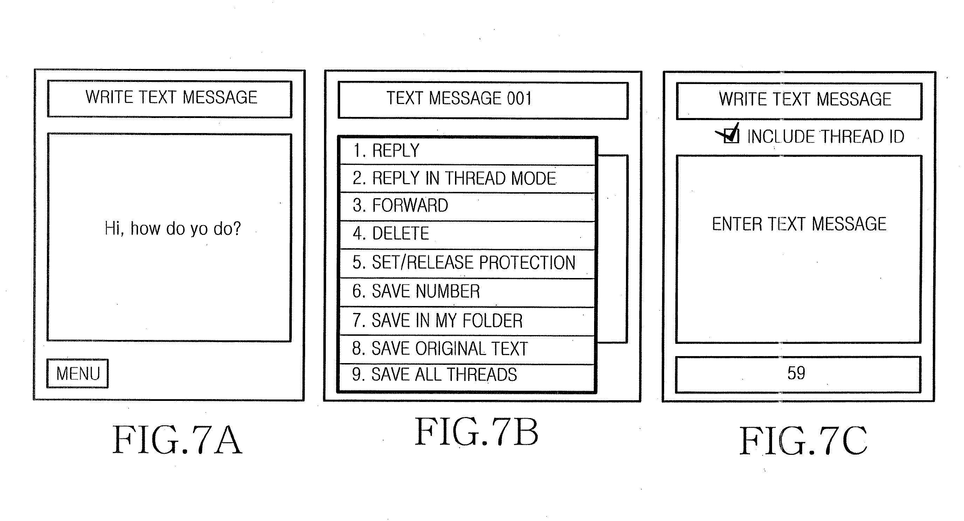

Afterwards, the controller 100 detects whether the user makes a selection opting to reply in a thread mode in step 415. For example, when the menu button is pressed while the received message is displayed, as shown in FIG. 7A, a menu window such as that shown in FIG. 7B pops up. Here, the user selects the second function from the list of the menu window, so that replying in thread mode is selected.

If replying in thread mode is not selected, the controller 100 performs step 429, in which a normal procedure is performed according to the selection of the user. If replying in thread mode is selected, the controller 100 performs step 417 to display a message writing window, as shown in FIG. 7C. Here, because the user has opted to reply in thread mode, the check box for selecting whether to use a thread ID is checked.

Next, the controller 100, in step 419, includes the thread ID of the received message in the content of the message written by the user. Here, as described above, delimiters are included before and after the thread ID in order to discern the thread ID from the message contents.

The controller 100 detects in step 421 whether the writing of the message is completed. If the writing of the message is complete, the controller 100 encodes the written message, based on the contents of the message and a phone number extracted from the received message, and sends the message in step 423. Then, the controller 100 stores the sent message in the outbox, and ends the present algorithm in step 425. Here, a delimiter that signifies that the message includes a thread ID may also be stored.

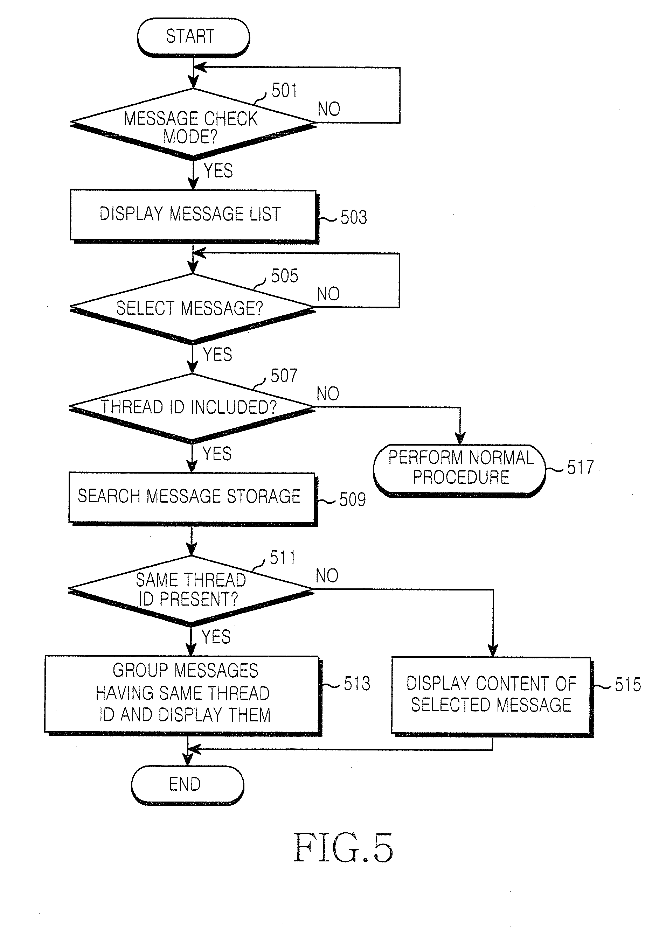

FIG. 5 is a flowchart of a process for checking a message using a thread function in a mobile communication terminal according to the present invention. Referring to FIG. 5, the controller 100 first checks in step 501 whether the user has enabled a message check mode through key inputs. Here, the message check mode may be the checking of messages in the message outbox or inbox, or the checking of message contents. When the message check mode is enabled, the controller 100 displays a message list on the display in step 503. Here, messages with thread IDs and messages without thread IDs may be discerned using icons or other discerning tools.

After the message list is displayed, the controller 100 detects in step 505 which of the categories from the message categories included in the message list is selected. Here, when one of the categories is selected, the controller 100 performs step 507 in which it detects whether the selected message includes a thread ID.

If a thread ID is not included, the controller 100 performs step 517 in which a normal procedure for displaying the selected message's contents is performed. On the other hand, if a thread ID is included, the controller 100 searches the message storage (in and out boxes) for the thread ID in step 509.

Then, the controller 100 determines whether there are messages in the message storage that have the same thread ID in step 511. If messages with the same thread ID do not exist, the controller 100 displays the contents of the selected message on the display in step 515. Contrarily, if messages exist with the same thread ID, the controller 100 groups the messages with the same thread ID (including the received message) in time order and displays the messages in step 513. In one example, as shown in FIG. 8, the contents of a plurality of messages having the same thread ID are displayed in time order. Here, the content of the most recently sent message is displayed at the top, and previous messages are displayed in chronologically descending order of transmission. Other methods of displaying messages include displaying messages according to their sending and receiving, and according to their senders.

In the above-described embodiment, all the messages in the message storage are searched for with the same thread ID; however, as described above, when messages having thread IDs are stored and managed in an alternate storage (the thread message storage), the grouped contents of messages having the same thread ID as the selected message may be searched from the thread message storage and displayed.

A function for storing messages having thread lDs in a separate storage may be performed according to a user's selection. For example, when the menu button is pressed while the received message shown in FIG. 7A is displayed, a menu window such as that in FIG. 7B may pop up. Here, when the user selects the eighth selection to save all the threads, the received message is stored in the alternate storage.

As described, from a commercial perspective, the present invention may be applied to a message server supporting a thread function without replacing a system. Also, a user is able to manifestly order and understand the flow of a dialogue during a message exchanging session. After the session, because the contents of messages having the same thread IDs can be grouped and displayed, this provides further convenience for the user.

While the invention has been shown and described with reference to certain preferred embodiments thereof, it will be understood by those skilled in the art that various changes in form and details may be made therein without departing from the scope of the invention as defined by the appended claims. For instance, although in the above description, the contents of the messages having thread IDs are said to include the thread IDs, the thread IDs may alternately be included in a reserved field of a message header and transmitted. Therefore, the scope of the present invention should not be limited to the above-described embodiments but is defined by the claims appended below.

## Claims

1. A method of transmitting a message in a mobile communication terminal, comprising the steps of:
generating a thread ID for supporting a thread function;
generating a message including the thread ID; and
transmitting the generated message.

2. The method of claim 1, wherein the thread ID is generated by a random number generator.

3. The method of claim 1 or 2, further comprising generating an alternate thread ID when the thread ID is already in use.

4. The method of one of claims 1 to 3, wherein the generated thread ID is included in contents of the generated message.

5. The method of one of claims 1 to 4, further comprising saving the transmitted message in a message storage.

6. The method of claim 5, wherein the transmitted message is saved in the message storage together with a delimiter indicating an inclusion of the thread ID.

7. A method of receiving a message in a mobile communication terminal, comprising the steps of:
detecting whether a received message includes a thread ID;
searching a message storage to detect messages therein having the same thread ID, when it is detected that the received message includes a thread ID;
grouping contents of the detected messages having the same thread ID; and
displaying the grouped contents.

8. The method of claim 7, wherein the step of displaying the detected messages displays the detected messages after arranging the contents of the detected messages in chronological order.

9. The method of claim 7 or 8, further comprising saving the received message in the message storage together with a delimiter for indicating an inclusion of the thread ID.

10. The method of one of claims 7 to 9, further comprising saving grouped contents of the detected messages having the same thread ID in a separate storage.

11. The method of one of claims 7 to 10, further comprising:
detecting the thread ID of the received message, when a thread mode reply is selected during display of the detected messages;
generating a reply message including the detected thread ID; and
transmitting the generated reply message.

12. The method of claim 11, further comprising saving the sent reply message in the message storage together with a delimiter for indicating an inclusion of the thread ID.

13. The method of claim 11, wherein the detected thread ID is included in contents of the reply message.

14. A method of managing messages in a mobile communication terminal, comprising the steps of:
displaying a message list during a message check mode;
checking whether a thread ID is included in a selected message when one category is selected from the message list;
searching a message storage and detecting messages having the same thread ID, when the thread ID is included in the selected message; and
grouping contents of the messages having the same thread ID, and displaying the grouped contents.

15. The method of claim 14, wherein the grouped contents are arranging in chronological order and displayed.

16. A method of managing messages in a mobile communication terminal, comprising the steps of:
using a thread ID for exchanging messages; and
grouping contents of the messages exchanged using the same thread ID, and saving the grouped contents in a separate storage.

17. The method of claim 16, wherein the grouped contents are arranged in chronological order and saved.

18. The method of claim 16 or 17, further comprising:
managing a list of thread lDs currently being used; and
generating an alternate thread ID when a newly-generated thread ID already exists in the managed list.

19. The method of one of claims 16 to 18, wherein the thread ID is included in the message contents.

20. The method of one of claims 16 to 19, further comprising saving transmitted messages and received messages together with a delimiter for indicating an inclusion of the thread ID in the separate storage using the same thread ID.

21. An apparatus for transmitting messages in a mobile communication terminal, comprising:
a generator for generating a thread ID for supporting a thread function;
a message writer for writing contents of a message including the generated thread ID;
a message encoder for encoding the contents of the message from the message writer according to a predetermined standard; and
a communicator for transmitting the message encoded by the message encoder.

22. The apparatus of claim 21, further comprising a memory for saving the transmitted message in a message storage.

23. The apparatus of claim 22, wherein the transmitted message is saved in the message storage together with a delimiter for indicating inclusion of the thread ID.

24. The apparatus of one of claims 21 to 23, wherein the generator generates the thread ID through a random number generator.

25. The apparatus of one of claims 21 to 25, wherein the generator generates an alternate thread ID if the thread ID is already in use.

26. The apparatus of claim 21, further comprising:
a message decoder for decoding a received message;
a detector for detecting thread ID in contents of the received message decoded in the message decoder; and
a controller for searching a memory to detect messages having the same thread ID, when the thread ID is detected by the detector, and grouping contents of the detected messages having the same thread ID and displaying the grouped contents.

27. The apparatus of one of claims 21 to 26, wherein the message writer writes the contents of the message including the thread ID detected from the corresponding received message, when a thread mode reply is selected.

28. The apparatus of claim 21, further comprising a memory for using a same thread ID to group contents of exchanged messages, and storing the grouped contents in a separate storage.

29. A mobile communication terminal for transmitting a message, comprising:
means for generating a thread ID for supporting a thread function;
means for generating a message including the thread ID; and
means for transmitting the generated message.

30. A mobile communication terminal for receiving a message, comprising :
means for detecting whether a received message includes a thread ID;
means for searching a message storage to detect messages therein having the same thread ID, when it is detected that the received message includes a thread ID;
means for grouping contents of the detected messages having the same thread ID; and
means for displaying the grouped contents.

31. A mobile communication terminal for managing messages , comprising:
means for displaying a message list during a message check mode;
means for checking whether a thread ID is included in a selected message when one category is selected from the message list;
means for searching a message storage and detecting messages having the same thread ID, when the thread ID is included in the selected message; and
means for grouping contents of the messages having the same thread ID, and displaying the grouped contents.

32. A mobile communication terminal for managing messages, comprising:
means for using a thread ID for exchanging messages; and
means for grouping contents of the messages exchanged using the same thread ID, and saving the grouped contents in a separate storage.
